# EUROPEAN PATENT SPECIFICATION

(11) **EP 2 544 321 B1**
(45) Date of publication and mention of the grant of the patent: **19.03.2014**
(21) Application number: 12174920.4
(22) Date of filing: 04.07.2012
(51) Int. Cl.: H02G 7/12

(54) **Spacer damper clamp arm**
Klammerarm für dämpfenden Abstandshalter
Bras de serrage pour écarteur -amortisseur

(30) Priority: 04.07.2011 GB 201111443
(43) Date of publication of application: 09.01.2013
(73) Proprietor: Preformed Line Products (GB) Limited, Andover, Hampshire SP12 3LH (GB)
(72) Inventor: Carley, Stephen, W, Romsey, Hampshire SO51 0NN (GB); Bentley, John, Andover, Hampshire SP11 6DB (GB)
(74) Representative: South, Nicholas Geoffrey

(56) References cited:
- WO-A1-2008/086480
- WO-A2-2005/107032
- GB-A- 2 286 727
- US-A- 3 161 721

## Description

The present invention relates to spacer dampers of the type typically used for spacing bundled electrical conductors suspended from pylons, and in particular to a clamp arm for use in such spacer dampers or other spacers.

A spacer damper typically comprises at least two clamps which grip respective conductors, mounted on a frame which separates the clamps. The clamps are typically mounted at the ends or corners of the frame or at predetermined locations on a circular section, and comprise an elongated arm and a cable gripping portion at one end of the arm. The mounting of the clamps on the frame permits a limited amount of movement of the clamps with respect to the frame, and also provides a controlled electrically semiconductive path between the clamp arm and the frame, both of which are usually made of metal.

The clamp arm is ordinarily made from two main components: an arm component, one end of which connects to the frame; and a keeper component, the arm and keeper typically being connected by a hinge arrangement which may be located at the end of the clamp arm furthest from the frame. The arm and the keeper are arranged to define a hole through which the conductors pass, when in a closed position, and the keeper can be pivoted into an open position by means of the hinge in order to open the clamp arm to allow the clamp arm to be fitted around the conductor before being clamped shut. An example of a spacer damper clamp arm is described in GB 2286727. As illustrated in GB 2286727, a moulded rubber clamp liner may be inserted between the conductor and the clamp, in order to protect the conductor and also provide a degree of damping.

Overhead transmission lines typically operate at nominal voltages of 275kV or 400kV, but may operate at up to 600kV. At these voltages, it is important that spacer dampers and other spacers are designed to achieve the required minimum corona discharge performance, in order to avoid the generation of visible corona during operation. Visible corona may be generated particularly in areas where electrical stress is concentrated. For this reason, the clamping portions of such spacers are generally designed so as to avoid sharp edges and protrusions, in particular at the extremities of the clamp arm. EP 1754293 A describes various arrangements of clamp arms and spacers formed by lateral extrusion, to provide a smooth outer surface with improved corona performance, without the need for additional machining.

In order to operate effectively on transmission lines at 400kV and above, overhead line components such as spacer dampers must be capable, in practice, of achieving corona free performance at voltages above 340kV phase to ground. Conventionally, on twin conductor bundles, such performance has only been achieved using metallic clamps which directly grip hard aluminium alloy conductors. Although adequate performance is easier to achieve when using triple, quad or hex bundles, there is a growing trend for existing twin bundle conductors to be replaced with new high current conductors in the same twin bundle configuration, rather than increasing the number of conductors, where it is desired to transmit a higher current. This is because increasing the number of conductors will require an upgrade in infrastructure, whereas upgrading the conductors means that existing configurations can be used, despite the increased cost of the conductors themselves.

In this connection, traditional transmission conductors may be AAAC (all-aluminiumalloy conductor) or GZTACSR (gap-type ZT-aluminium conductor, steel reinforced) conductors, both of which have a hard outer layer of aluminium alloy. With such conductors, due to the hard outer surface, it is possible to grip the conductor using a metallic clamp without damaging the outer strands of the conductor. Other commonly used conductors use pure aluminium strands reinforced with a steel core (ACSR - aluminium conductor, steel-reinforced) or AAC (all-aluminium conductor), and therefore have a relatively soft outer surface of pure aluminium. However, these conductors usually operate at lower service temperatures, typically 70°C, and relatively low tensions, such that conventional metallic fittings do not pose significant risk of damage to the conductor.

However, a new generation of conductors is being introduced, which places new demands on the clamps used to secure them. These conductors are composite conductors made of mixed metals, or metal and synthetic materials in combination. Such conductors typically use a high tensile composite or steel core with a pure aluminium outer layer.

The new composite conductors can be used at high temperatures, typically above 130°C, and are therefore able to carry very high currents. Previously, in order to increase current flow on a transmission line, it was usual to increase the number of conductors in the bundle from two to three or four, typically using an AAAC conductor. With the enhanced current carrying capacity of the new generation of composite conductors, there is likely to be an increased tendency to use only two conductors ('twin-bundled conductors'), but at a higher current. The economic benefits of this include a reduction in the need to strengthen pylon steel work when increasing the number of conductors, and the potential of reduced way-leaves (i.e. payments by the utility company to land owners per installed conductor), by utilising twin conductors at high current loads.

Composite conductors of the type described above are expected to enter service in the UK in 2011.

Compared with the conventional aluminium alloy conductors, or conductors having at least a hard aluminium alloy outer layer, the pure aluminium outer surface of these composite conductors is much softer, and more prone to damage. In particular, the composite conductors are typically intended for use at very high tensions in service, and at temperatures, for example around 130°C, above which pure aluminium starts to "creep". This combination of high tension and high temperature leaves the conductor particularly prone to being damaged or abraded by metal clamps, especially when vibration is present in the conductor span. In this connection, it should be noted that operating conductors at increased tensions increases the stress in the conductor. This increase in tension leads to a reduction in the self-damping of the conductor and an increase in vibration amplitude, especially at high frequencies, which in turn increases the effect of Aeolian vibration. This lowers the number of cycles that can be absorbed over the life of the conductor without failure, and makes it more important to effectively clamp the conductor at the clamp arm.

In addition, due to the very high current loads typically carried by these conductors, the failure or breakage of a conductor strand is much more serious than on conventional conductors, since there is little or no extra current carrying capacity in failure mode.

There is therefore a need for spacer dampers and clamping components suitable for gripping these composite conductors at high temperatures without damaging, by vibration, the soft aluminium outer surface of the conductor, while still providing the required slip resistance at high tensions. Furthermore, these components also need to be capable of providing corona free performance at 340kV phase to ground.

It is known to use armour rods to surround the conductor, and a metal bolted clamp to hold the conductor when clad in this way. This approach allows the use of higher currents and higher temperatures in the conductor, by dissipating the temperature through the armour rods, thereby facilitating the use of conventional clamps which are not otherwise suited to the increased conductor temperatures. However, applying armour rods to the conductor is time consuming for the installer, and conventional bolted conductors are prone to cause undesirable indentations in the conductor strands.

US 4480149 and GB 1587233 describe examples of spacer dampers, but it has been determined by the present inventors from testing of various different designs that these arrangements would not meet the temperature or corona requirements of the new high current, high temperature composite conductors.

The present invention provides a clamp arm for use in spacer dampers for the separation of multiple transmission conductors, as claimed in claim 1. The clamp arm comprises an arm member and a keeper member, which are preferably attached by a hinged arrangement at an end distal from the spacer damper frame, when in use, such that the clamp arm can be hinged between open and closed positions, and clamped around the conductor. The distal end of the clamp arm is preferably formed in the general shape of a sphere which is laterally truncated. This shape provides improved corona performance, particularly at high transmission voltages.

In order to further improve the corona performance, the hinge arrangement is preferably formed using a hidden hinge pin, which is located within blind bores or slots in the arm or keeper members, and which does not extend to the outside surface of the distal end of the clamp arm, thereby allowing the exterior surface to include a reduced number of discontinuities and provide a smoother exterior contour. In other words, the exterior surface of the distal end of the clamp arm forms a continuous surface over the ends of the hinge pin. With this arrangement, it has been found possible to achieve corona free performance at 340kV phase to ground, on a twin bundle conductor.

The clamp arm is provided with a clamp liner which surrounds the conductor when the clamp arm is in a closed position. The clamp liner is preferably formed from a synthetic semi-conductive high temperature elastomer, suitable for use at temperatures in excess of 130°C, and ideally in excess of 160°C, such as a cross linked high temperature EPDM (ethylene propylene diene monomer) or fluoroelastomer semi-conductive compound or silicone, which enables the clamp to grip soft aluminium conductors, even at high temperatures, while maintaining a required slip resistance and electrical resistance between 1-20 MΩ, without causing damage to the conductor. Preferably, the geometry of the clamp arm and clamp liner relative to the conductor is arranged to provide in the region of 12%-18% compression in the clamp liner when the clamp arm is secured to the conductor, and preferably around 15%, which has been found to provide the required slip resistance at temperatures of above 130°C, when using the above identified elastomers.

An embodiment of the invention will now be described, by way of example, with reference to the accompanying drawings, in which:
Figure 1 shows a side view of a clamp arm according to the present invention, in a closed position;
Figure 1(a) shows a side view of the clamp arm in an open position;
Figure 2 shows a perspective view of the clamp arm;
Figures 3(a) and 3(b) show the arm member of the clamp arm;
Figures 4(a) and 4(b) show the keeper member of the clamp arm; and
Figure 5(a) shows a plan view of the arm member and Figure 5(b) shows a cross-sectional view of the arm member along the line D-D in Figure 5(a), together with an enlarged view of the distal end of the arm member.

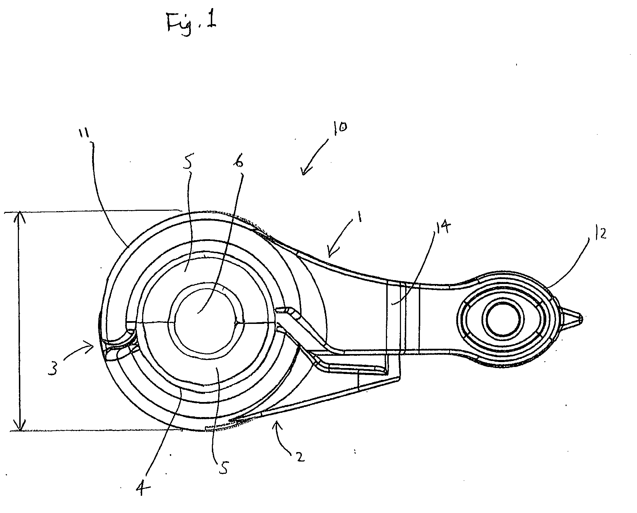

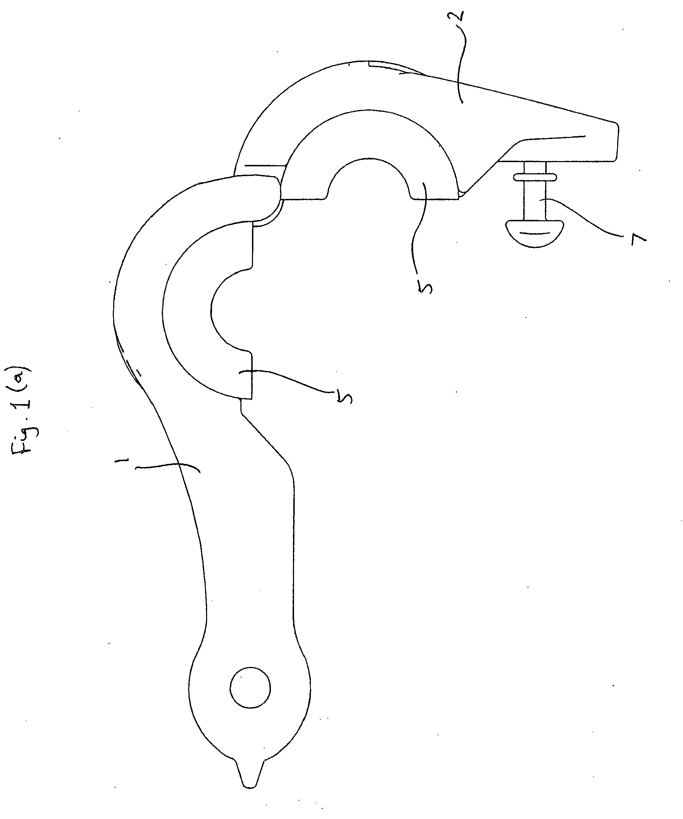

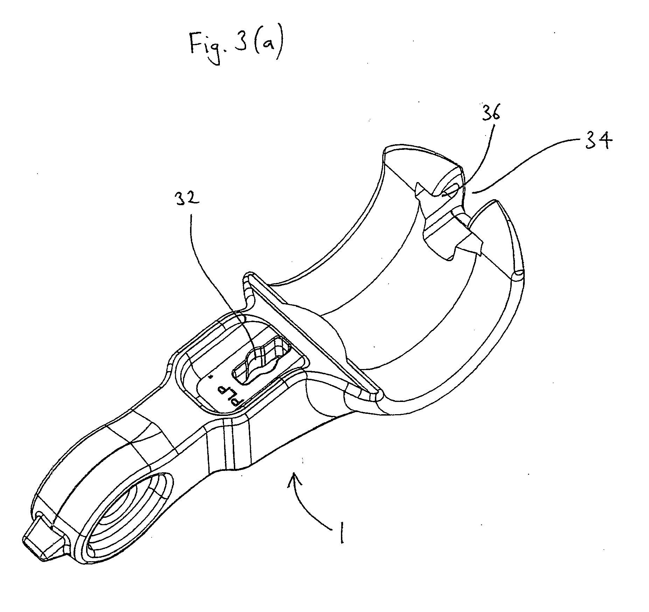

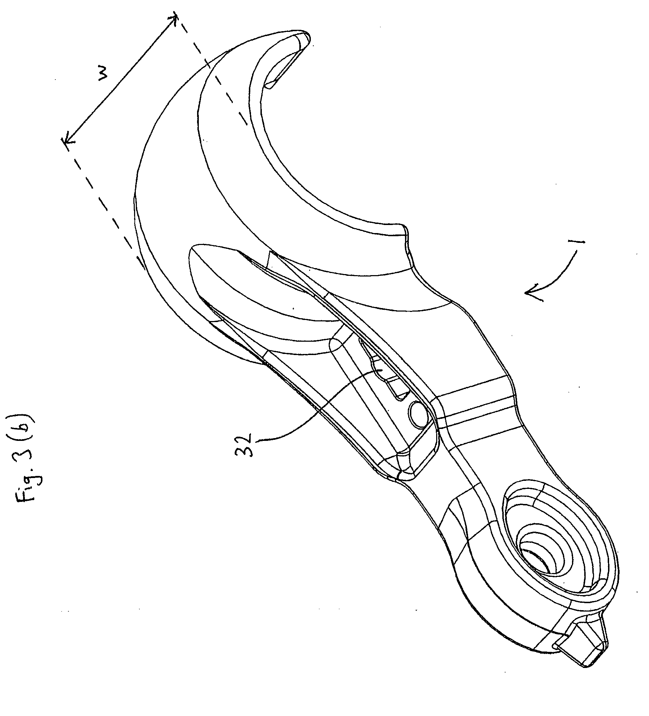

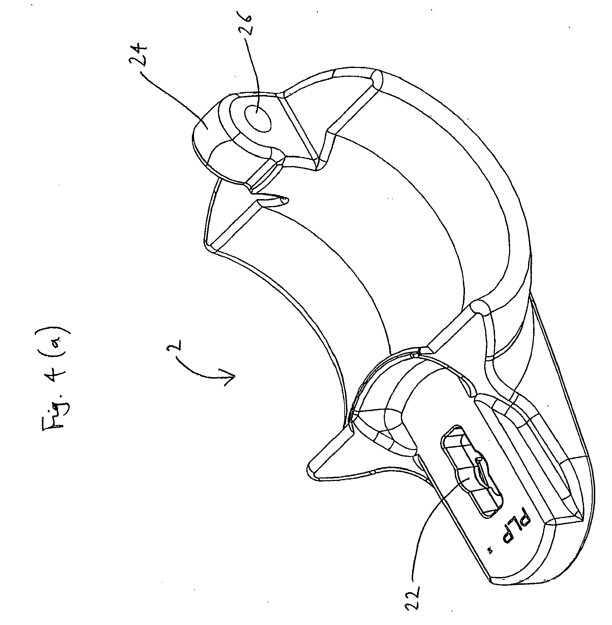

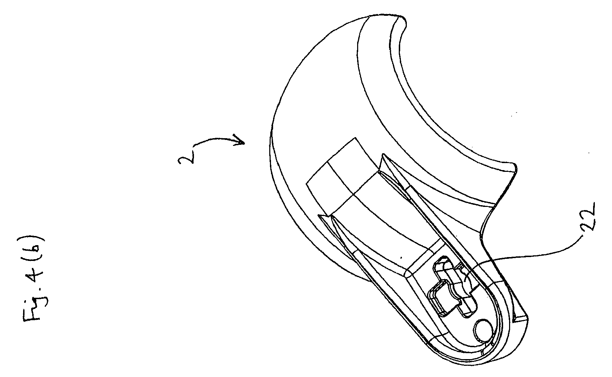

A preferred embodiment of the clamp arm according to the invention is shown in side view in Figure 1. The clamp arm 10 comprises an arm member 1 and a keeper member 2, which can be clamped around a conductor which passes through an aperture 4 defined towards a first end 11 of the clamp arm between the arm and the keeper, in the closed position. A second end 12 of the clamp arm is designed for attachment to a spacer damper frame. The arm 1 and keeper 2 are pivotally connected by a hinge arrangement 3 located at the first end of the clamp arm. When positioned around a conductor in the closed position, the clamp arm may be secured by introducing a bolt or other fastener through corresponding slots 22, 32 in the arm and keeper (shown in Figures 3 and 4), in a conventional manner.

Figure 1(a) shows the clamp arm of Figure 1 in an open position, and shows the bolt or pin 7 used to secure the keeper to the arm when the clamp arm is closed.

In use, the conductor is secured within the clamp arm using a pair of clamp liners 5 located in the aperture between the arm and the keeper. The clamp liners typically comprise a pair of inserts with approximately semi-circular cross-section, which are respectively placed in the respective recesses of the arm and keeper members which define the aperture 4. The outer surface of each insert is shaped to correspond to the inner surface of the recessed aperture portion of the arm and keeper, and an inner surface of each insert is shaped to correspond to the size and/or shape of the conductor to which the arm is intended to be clamped. In this way, when the clamp liners are positioned in the aperture, and the clamp arm is in the closed position, the clamp liner fills the aperture but defines a central bore 6 through which the conductor can pass. The clamp liner is made from an elastomeric material which provides a degree of resilience, such that a controlled gripping pressure can be applied to the conductor by controlling the size of the bore relative to the diameter of the conductor, thereby reducing the bending strain at the interface between the conductor and the clamp liner.

In accordance with the present embodiment, the clamp liner is made of a high temperature elastomer capable of providing a secure grip without damage to a soft aluminium conductor at temperatures above 130°C. In particular, the clamp liner should be capable of enabling the clamp to grip the conductor while maintaining a slip resistance of 1kN for one minute. Preferably, this performance is achieved at temperatures above 130°C, and on round and trapezoidal conductors. More preferably, the clamp liner material is selected also to be capable of resisting atmospheric ozone for a period of at least 10 years, and preferably 15 years, while continuing to meet the specified temperature, slip resistance and electrical resistance requirements.

In order to achieve this performance, in a preferred embodiment the clamp liner is formed from a cross linked high temperature EPDM (ethylene propylene diene monomer) or fluoroelastomer semi-conductive compound, silicone, or other suitable synthetic semi-conductive high temperature elastomers. When using these compounds, it has been found that the required slip resistance can be achieved at temperatures above 130°C when the geometry of the clamp arm and clamp liner relative to the conductor is arranged to provide in the region of 15% compression in the clamp liner when the clamp arm is secured to the conductor. This performance has been achieved on both round and trapezoidal conductors.

The embodiment of clamp arm shown in Figures 1 to 4 has been designed to achieve the required radio interference voltage (RIV) and corona performance on twin bundled conductors at voltages above 340kV phase to ground. This is achieved through the unique geometry of the clamp arm.

It will be appreciated that RIV levels are closely related to corona discharge. At the point at which corona discharge occurs, RIV levels become extremely high and disruptive. The graph of a RIV test will typically show a fairly flat line until corona discharge occurs, at which point there will be a vertical increase in the RIV level, resulting in a distinct transition point between no corona and positive corona discharge on the RIV curve.

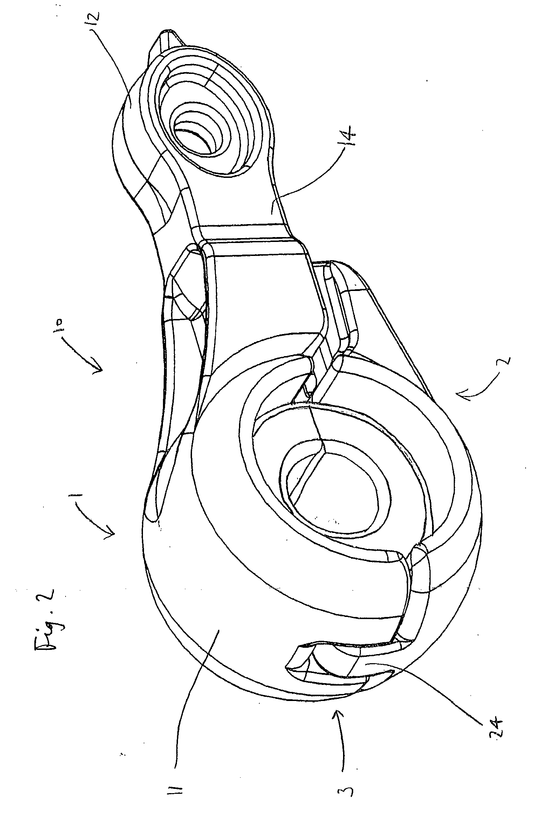

As shown in Figure 2, the first end 11 of the clamp arm 10 has a substantially spherical shape formed by the curved outer surfaces of the arm portion and keeper portion when clamped together in the closed position, with an elongate body portion 14 extending from the substantially spherical first end 11 towards the second end 12. The spherical shape of the first end is laterally truncated at each side, as can be seen in Figures 3 and 4, such that the lateral width w of the first end of the clamp arm (see Figure 3(b)) is less than the diameter of the spherical curvature of its outer surface.

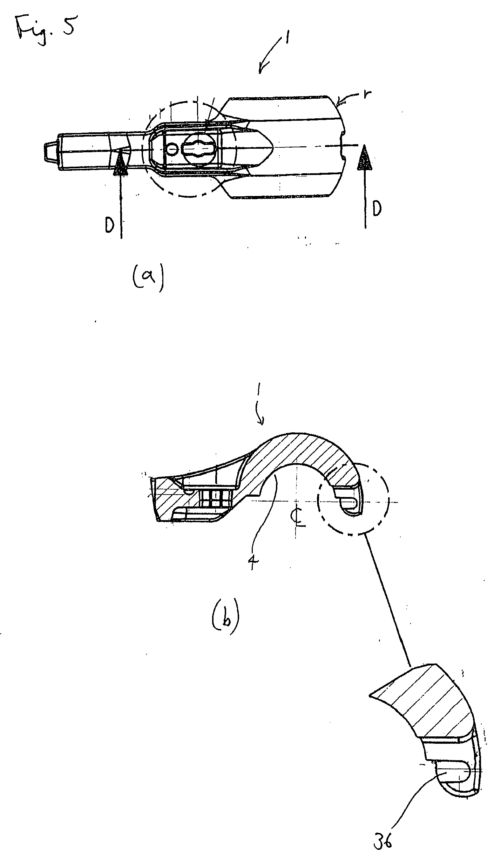

In particular, the clamp arm has been found to have an advantageous corona performance when the dimensions of the first end portion 11 are such that the aspect ratio of the first end portion is approximately 25.5:15:18.75, the aspect ratio being defined as the ratio between the external diameter of the clamp (the distance d in Figure 1), the radius of curvature of the clamp in a lateral direction (i.e. the radius of the curve across the width w in Figure 3(a), also shown as the radius r in Figure 5(a)), and the width of the clamp (width w in Figure 3(a)), i.e. the aspect ratio d:r:w. This parameter has been determined to provide superior corona performance, through experimental high voltage testing by the inventors. Preferably the ratio d:r is in the range from 24:15 to 27:15, and more preferably 25.5:15. Preferably the ratio r:w is in the range from 15:18 to 15:19.5, and more preferably 15:18.75.

The inventors have conducted tests of the improved clamp design in comparison with previous designs, and found the previous design, having an aspect ratio d:r:w of 30:10:13.33 failed the corona test at approximately 298kV. Using the new design described and illustrated herein, having an aspect ratio d:r:w of 25.5:15:18.75, the clamp arm was free from corona discharge at 340kV.

In order to further improve the corona performance, the clamp arm is preferably manufactured with a surface finish selected to reduce roughness, and typically with a surface roughness of around 1.6-6.3 Ra.

The preferred hinge arrangement 3 between the arm and the keeper is shown in Figure 2. A protrusion 24 formed in the keeper member is received in a corresponding recess in the arm member, such that the arm member and keeper member interlock to form the hinge, and these components are arranged to pivot with respect to one another about a pin (not shown) which extends through a bore formed in both the protrusion 24 of the keeper member and the adjacent portions of the arm member. It will be appreciated that the protrusion may instead be formed in the arm member, so as to interlock with a corresponding recess in the keeper member, and that various other modifications of this hinge arrangement may be used.

Figures 3(a), 4(a) and 4(b) show in more detail the way in which the preferred hinge arrangement is formed in the arm member and keeper member, with a hidden pin. Figure 4(a) shows the protrusion 24 formed at the distal end of the keeper member, and the axial bore 26 in the protrusion for receiving the pin. Figure 3(a) shows the corresponding recess 34 in the arm member 2, which interlocks with the protrusion 24 in the keeper member so that the arm and keeper hinge around a pin located in the bore 26. It will be appreciated that other interlocking hinge arrangements may also be used to achieve the hinged relationship between the arm and keeper.

Figure 3(a) also shows that the portions of the arm member immediately adjacent the recess 34 are each provided with a blind bore 36 for receiving each end of the pin when the arm and keeper are assembled together in a hinged relationship. A blind bore 36 is formed on each side of the recess 34, and acts as an extension of the bore 26 in the protrusion 24 of the keeper member, when the arm and keeper are assembled with the pin extending through the bore 26. In order to allow for insertion of the pin into position and the assembly of the hinged clamp arm, each blind bore 36 is laterally open in a direction towards the aperture 4 of the clamp arm to form a slot, as shown more clearly in Figure 5(b), to allow the pin to be pushed laterally into position.

In order to assemble the clamp arm, the pin is inserted into the bore 26 in the protrusion 24 of the keeper member 2, and the protrusion 24 of the keeper is then positioned adjacent to the recess 34 of the arm member 1, with the ends of the pin located laterally adjacent to the blind bores or slots 36. The arm and keeper can then be attached together in a hinged engagement by locating the pin laterally into the slots, with the protrusion 24 fully locating within the recess 34. The slots may be arranged to receive the pin in a tight fit, and the location of the pin in these slots may be achieved in a single mechanical operation using appropriate tools or machinery.

Since the blind bores or slots 36 do not extend through to the exterior surface of the clamp arm, they act to locate the pin axially in position within the hinge arrangement. Furthermore, the slots 36 provide the additional advantage that the pin is entirely contained within the hinge arrangement without requiring the pin to be inserted through a bore in the external surface of the clamp arm, allowing for a more continuous surface contour of the substantially spherical surface of the first end portion of the clamp arm, thereby improving its corona performance. This configuration provides a significant advantage over conventional arrangements in which the arm and keeper members are typically hinged by providing a pin which is exposed to the exterior surface of the clamp arm at its ends, for example where the clamp arm is assembled by sliding the pin axially into the hinge from the outside. In such conventional arrangements, any exposed portion of the pin itself or of the bore in which it is located can give rise to a discontinuity in the exterior surface of the clamp arm which reduces the corona performance. This is particularly significant at higher voltages, for example when using a clamp arm with a 400kV transmission line.

The illustrated clamping arrangement, and in particular the shape of the truncated spherical end portion and/or the hidden pin configuration of the hinge arrangement, may also be used in other types of clamping components, in order to achieve superior corona performance. For example, the clamping arrangement may be used in semiflex spacers which provide no damping but clamp the conductor using an elastomer insert, or in other arrangements of spacer weights or jumper weights. The clamping arrangement can also be used to clamp various configurations of conductors, such as T2 configurations in which pairs of conductors are twisted around one another, or conductors with various cross sectional shapes, but using appropriately shaped clamp liners.

## Claims

1. A clamp arm (10) for use in a spacer damper for the separation of multiple transmission conductors specifically designed to run at temperatures greater than 130°C, the clamp arm having one distal extremity (11) designed to support a conductor and the other extremity (12) being provided with an end portion which is arranged to be received, in use, in a cooperating recess in a frame, the clamp arm comprising an arm member (1) and a keeper member (2), the arm member and keeper member being arranged to grip the conductor, in use, when fastened together,
wherein the clamp arm further comprises a clamp liner (5) arranged to surround the conductor when the clamp arm is in a closed position, in use, around the conductor, and
the clamp liner (5) is formed from a synthetic semi-conductive elastomer suitable for gripping the conductor at a temperature exceeding 130°C, and
wherein the keeper member is attached to the arm member by hinge means (3) arranged such that the clamp arm can be hinged between open and closed positions about a hinge pin,
**characterised in that** the ends of the hinge pin are enclosed within the clamp arm, and the hinge pin is arranged such that it does not extend to the outer surface of the distal end of the clamp arm.

2. A clamp arm as claimed in claim 1, wherein the clamp liner (5) is formed from a synthetic semi-conductive elastomer suitable for gripping the conductor at a temperature exceeding 160°C.

3. A clamp arm as claimed in claim 1 or 2, wherein the clamp liner (5) is formed from cross linked high temperature EPDM (ethylene propylene diene monomer) or fluoroelastomer semi-conductive compound or silicone, specifically formulated to operate at temperatures greater than 130°C.

4. A clamp arm as claimed in any preceding claim, wherein the clamp liner (5) is formed from material selected such that the clamp arm is able to grip the conductor, in use, while maintaining a slip resistance of 1kN for one minute, at a conductor temperature of 130°C.

5. A clamp arm as claimed in any preceding claim, wherein the geometry of the clamp arm and clamp liner relative to the conductor is arranged to provide, in use, around 15% compression in the clamp liner when the clamp arm is secured to the conductor operating at temperatures greater than 130°C.

6. A clamp arm as claimed in any preceding claim, wherein the distal end of the clamp arm is shaped generally in the form of a laterally truncated sphere.

7. A clamp arm as claimed in claim 6, wherein the distal end of the clamp arm in a closed position has dimensions such that the aspect ratio between its external diameter (d) and its external radius of curvature in a lateral direction (r), is in the range from 24:15 to 27:15, and preferably 25.5:15.

8. A clamp arm as claimed in claim 6 or 7, wherein the distal end of the clamp arm in a closed position has dimensions such that the aspect ratio between its external radius of curvature in a lateral direction (r), and its lateral width (w), is in the range from 15:18 to 15:19.5, and preferably 15:18.75.

9. A clamp arm as claimed in claim 6, 7 or 8, wherein the distal end of the clamp arm in a closed position has dimensions such that the aspect ratio between its external diameter (d), its external radius of curvature in a lateral direction (r), and its lateral width (w), is around 25.5:15:18.75.

10. A clamp arm as claimed in any preceding claim, wherein the external profile of the distal extremity of the clamp arm is sufficiently free of sharp discontinuities to prevent corona discharge at a voltage of 340kV phase to ground, in use.

11. A clamp arm as claimed in any preceding claim, wherein the distal end of the clamp arm is shaped generally in the form of a laterally truncated sphere, and the hinge pin is fully enclosed within the truncated spherical form of the distal end of the clamp arm, in a closed position.

12. A clamp arm as claimed in any preceding claim, wherein the arm member or keeper member is provided with blind bores or slots (36) for laterally receiving the hinge pin when in an open position, while restricting axial movement of the hinge pin.

13. A spacer damper for the separation of multiple transmission conductors specifically designed to run at temperatures greater than 130°C, the spacer damper comprising a frame and a plurality of clamp arms according to any preceding claim, attached to the frame.

## Patentansprüche

1. Klemmenarm (10) zur Verwendung in einem dämpfenden Feldbündelabstandhalter zur Trennung von mehreren Übertragungsleitungen, die speziell dazu konstruiert sind, bei Temperaturen von mehr als 130 °C zu arbeiten, wobei der Klemmenarm ein fernes Ende (11) aufweist, das dazu konstruiert ist, eine Leitung zu tragen, und das andere Ende (12) mit einem Endabschnitt versehen ist, das dazu eingerichtet ist, im Gebrauch in einer zusammenwirkenden Aussparung in einem Rahmen aufgenommen zu werden, wobei der Klemmenarm ein Armelement (1) und ein Halterelement (2) umfasst, wobei das Armelement und das Halterelement dazu eingerichtet sind, die Leitung im Gebrauch zu greifen, wenn sie aneinander befestigt werden,
wobei der Klemmenarm weiterhin eine Klemmenauskleidung (5) umfasst, die dazu eingerichtet ist, die Leitung zu umgeben, wenn der Klemmenarm im Gebrauch in einer geschlossenen Stellung um die Leitung herum ist, und
wobei die Klemmenauskleidung (5) aus einem synthetischen halbleitenden Elastomer hergestellt ist, das zum Greifen der Leitung bei einer Temperatur, die 130 °C übersteigt, geeignet ist, und
wobei das Halterelement an dem Armelement durch ein Scharniermittel (3) angebracht ist, so dass der Klemmenarm zwischen einer geöffneten und einer geschlossenen Stellung um einen Scharnierbolzen geklappt werden kann,
**dadurch gekennzeichnet, dass** die Enden des Scharnierbolzens innerhalb des Klemmenarms umschlossen sind und der Scharnierbolzen derart eingerichtet ist, dass er sich nicht zu der Außenfläche des fernen Endes des Klemmenarms erstreckt.

2. Klemmenarm nach Anspruch 1, wobei die Klemmenauskleidung (5) aus einem synthetischen halbleitenden Elastomer hergestellt ist, das zum Greifen der Leitung bei einer Temperatur, die 160 °C übersteigt, geeignet ist.

3. Klemmenarm nach Anspruch 1 oder 2, wobei die Klemmenauskleidung (5) aus vernetztem Hochtemperatur-EPDM (Ethylen-Propylen-Dien-Monomer) oder einer halbleitenden Fluorelastomerverbindung oder einem Silikon hergestellt ist, das speziell dazu formuliert ist, bei Temperaturen von mehr als 130 °C betrieben zu werden.

4. Klemmenarm nach einem vorhergehenden Anspruch, wobei die Klemmenauskleidung (5) aus einem Material hergestellt ist, das derart ausgewählt ist, dass der Klemmenarm die Leitung im Gebrauch erfassen kann, während eine Rutschfestigkeit von 1 kN für eine Minute bei einer Leitungstemperatur von 130 °C aufrechterhalten wird.

5. Klemmenarm nach einem vorhergehenden Anspruch, wobei die Geometrie des Klemmenarms und der Klemmenauskleidung in Bezug auf die Leitung derart eingerichtet ist, im Gebrauch eine Kompression von etwa 15 % in der Klemmenauskleidung bereitzustellen, wenn der Klemmenarm an der Leitung gesichert wird, die bei Temperaturen von mehr als 130 °C betrieben wird.

6. Klemmenarm nach einem vorhergehenden Anspruch, wobei das ferne Ende des Klemmenarms im Allgemeinen in der Form einer seitlich abgeschnittenen Kugel geformt ist.

7. Klemmenarm nach Anspruch 6, wobei das ferne Ende des Klemmenarms in einer geschlossenen Stellung derartige Abmessungen hat, dass das Aspektverhältnis zwischen seinem Außendurchmesser (d) und seinem Außenkrümmungsradius in einer Seitenrichtung (r) im Bereich von 24:15 bis 27:15 und vorzugsweise 25,5:15 liegt.

8. Klemmenarm nach Anspruch 6 oder 7, wobei das ferne Ende des Klemmenarms in einer geschlossenen Stellung derartige Abmessungen hat, dass das Aspektverhältnis zwischen seinem Außenkrümmungsradius in einer Seitenrichtung (r) und seiner Seitenbreite (w) im Bereich von 15:18 bis 15:19,5 und vorzugsweise 15:18,75 liegt.

9. Klemmenarm nach Anspruch 6, 7 oder 8, wobei das ferne Ende des Klemmenarms in einer geschlossenen Stellung derartige Abmessungen hat, dass das Aspektverhältnis zwischen seinem Außendurchmesser (d), seinem Außenkrümmungsradius in einer Seitenrichtung (r) und seiner Seitenbreite (w) etwa 25,5:15:18,75 beträgt.

10. Klemmenarm nach einem vorhergehenden Anspruch, wobei das Außenprofil des fernen Endpunkts des Klemmenarms ausreichend frei von scharfen Fehlstellen ist, um im Gebrauch eine Koronaentladung bei einer Phase-Erde-Spannung von 340 kV zu verhindern.

11. Klemmenarm nach einem vorhergehenden Anspruch, wobei das ferne Ende des Klemmenarms im Allgemeinen in der Form einer seitlich abgeschnittenen Kugel geformt ist und der Scharnierbolzen innerhalb der abgeschnittenen Kugelform des fernen Endes des Klemmenarms in einer geschlossenen Stellung vollständig umschlossen ist.

12. Klemmenarm nach einem vorhergehenden Anspruch, wobei das Armelement oder das Halterelement mit Blindbohrungen oder -schlitzen (36) zum seitlichen Aufnehmen des Scharnierbolzens versehen ist, wenn er sich in einer offenen Stellung befindet, während eine Axialbewegung des Scharnierbolzens eingeschränkt wird.

13. Dämpfender Feldbündelabstandhalter zur Trennung von mehreren Übertragungsleitungen, die speziell dazu konstruiert sind, bei Temperaturen von mehr als 130 °C zu arbeiten, wobei der dämpfende Feldbündelabstandhalter einen Rahmen und mehrere Klemmenarme nach einem vorhergehenden Anspruch umfasst, die an dem Rahmen angebracht sind.

## Revendications

1. Bras de serrage (10) destiné à être utilisé dans un espaceur-amortisseur pour assurer la séparation de conducteurs de transmission multiples spécifiquement conçus pour une exploitation à des températures supérieures à 130° C, le bras de serrage possédant une extrémité distale (11) conçue pour soutenir un conducteur et l'autre extrémité (12) étant pourvue d'une portion d'extrémité qui est agencée de façon à être reçue, en utilisation, dans un évidement agissant en coopération dans un cadre, le bras de serrage comportant un élément de bras (1) et un élément de retenue (2), l'élément de bras et l'élément de retenue étant agencés de façon à agripper le conducteur, en utilisation, lorsqu'ils sont assujettis l'un à l'autre,
cas dans lequel le bras de serrage comprend en outre un garnissage de serrage (5) agencé de façon à entourer le conducteur lorsque le bras de serrage se trouve dans une position fermée, en utilisation, autour du conducteur, et
le garnissage de serrage (5) est réalisé à partir d'un élastomère semi-conducteur synthétique qui est adapté pour agripper le conducteur à une température dépassant 130° C, et
cas dans lequel l'élément de retenue est attaché à l'élément de bras à l'aide de moyens à charnière (3) agencés de sorte que le bras de serrage peut être articulé entre des positions ouverte et fermée autour d'une broche de charnière,
**caractérisé en ce que** les extrémités de la broche de charnière sont abritées à l'intérieur du bras de serrage, et la broche de charnière est agencée de telle sorte qu'elle ne se prolonge pas jusqu'à la surface extérieure de l'extrémité distale du bras de serrage.

2. Bras de serrage selon la revendication 1, le garnissage de serrage (5) étant réalisé à partir d'un élastomère semi-conducteur synthétique qui est adapté pour agripper le conducteur à une température dépassant 160° C.

3. Bras de serrage selon la revendication 1 ou 2, le garnissage de serrage (5) étant réalisé à partir de silicone ou d'un composé semi-conducteur en fluoroélastomère ou d'EPDM (monomètre d'éthylène propylène diénique) réticulé pour hautes températures, ayant été spécifiquement formulé pour une exploitation à des températures supérieures à 130° C.

4. Bras de serrage selon l'une quelconque des revendications précédentes, le garnissage de serrage (5) étant réalisé à partir d'une matière ayant été sélectionnée de sorte que le bras de serrage est apte à agripper le conducteur, en utilisation, tout en conservant une résistance au glissement de 1 kN pendant une minute, à une température de conducteur de 130° C.

5. Bras de serrage selon l'une quelconque des revendications précédentes, la géométrie du bras de serrage et du garnissage de serrage par rapport au conducteur étant agencée de façon à procurer, en utilisation, une compression d'environ 15 % dans le garnissage de serrage lorsque le bras de serrage est assujetti au conducteur en exploitation à des températures supérieures à 130° C.

6. Bras de serrage selon l'une quelconque des revendications précédentes, l'extrémité distale du bras de serrage étant façonnée de manière générale sous la forme d'une sphère tronquée dans le plan latéral.

7. Bras de serrage selon la revendication 6, l'extrémité distale du bras de serrage dans une position fermée ayant des dimensions telles que le rapport d'aspect entre son diamètre externe (d) et son rayon de courbure externe suivant un sens latéral (r), se situe dans la gamme allant de 24:15 à 27:15, et de préférence 25,5:15.

8. Bras de serrage selon la revendication 6 ou 7, l'extrémité distale du bras de serrage dans une position fermée ayant des dimensions telles que le rapport d'aspect entre son rayon de courbure externe suivant un sens latéral (r), et sa largeur latérale (w), se situe dans la gamme allant de 15:18 à 15:19,5, et de préférence 15:18,75.

9. Bras de serrage selon la revendication 6, 7 ou 8, l'extrémité distale du bras de serrage dans une position fermée ayant des dimensions telles que le rapport d'aspect entre son diamètre externe (d), son rayon de courbure externe suivant un sens latéral (r), et sa largeur latérale (w), se situe aux alentours de 25,5:15:18,75.

10. Bras de serrage selon l'une quelconque des revendications précédentes, le profil externe de l'extrémité distale du bras de serrage étant suffisamment exempte de discontinuités tranchantes pour empêcher une décharge par effet corona à une tension de 340 kV phase à la terre, en utilisation.

11. Bras de serrage selon l'une quelconque des revendications précédentes, l'extrémité distale du bras de serrage étant façonnée de manière générale sous la forme d'une sphère tronquée dans le plan latéral, et la broche de charnière étant entièrement abritée à l'intérieur de la forme sphérique tronquée de l'extrémité distale du bras de serrage, dans une position fermée.

12. Bras de serrage selon l'une quelconque des revendications précédentes, l'élément de bras ou l'élément de retenue étant pourvu de fentes ou d'alésages borgnes (36) afin de recevoir dans le plan latéral la broche de charnière quand elle se trouve en position ouverte, tout en limitant le mouvement axial de la broche de charnière.

13. Espaceur-amortisseur pour assurer la séparation de conducteurs de transmission multiples spécifiquement conçus pour une exploitation à des températures supérieures à 130° C, l'espaceur-amortisseur comprenant un cadre et une pluralité de bras de serrage, selon l'une quelconque des revendications précédentes, qui sont attachés au cadre.
